# EUROPÄISCHE PATENTANMELDUNG

(11) **EP 0 656 276 A1**
(43) Veröffentlichungstag der Anmeldung: **07.06.1995**
(21) Anmeldenummer: 94117707.3
(22) Anmeldetag: 10.11.1994
(51) Int. Cl.: B60K 31/04

(54) **Verfahren zur Geschwindigkeitsbegrenzung in allen Fahrzuständen und Vorrichtung zur Durchführung des Verfahrens**

(30) Priorität: 03.12.1993 DE 4341212
(71) Anmelder: VOITH TURBO GMBH & CO. KG, D-74564 Crailsheim (DE)
(72) Erfinder: Scherer, Roland, D-74564 Crailsheim (DE)
(74) Vertreter: Weitzel, Wolfgang, Dr.-Ing. Patentanwalt

(57) **Zusammenfassung**

Die Erfindung betrifft ein Verfahren zur Begrenzung der Fahrgeschwindigkeit auf einen Wert im Bereich eines einstellbaren Maximalwertes vₘₐₓ in allen Fahrzuständen eines Fahrzeuges mit einer Kraftmaschine mit einem Arbeitsbereich und einem Retarder mit den folgenden Merkmalen:
- der aktuelle Istwert der Fahrgeschwindigkeit vᵢₛₜ wird ständig gemessen;
- bei Überschreitung des Maximalwertes vₘₐₓ wird die Kraftmaschine innerhalb eines Regelbereiches abgeregelt;
- eine Regelung auf einen konstanten Wert der Fahrgeschwindigkeit vₖₒₙₛₜ mittels Retardersteuerung ist aktivierbar;
Die Erfindung ist gekennzeichnet durch die folgenden Merkmale:
- der Istwert vᵢₛₜ wird ständig mit dem Maximalwert vₘₐₓ verglichen;
- bei völliger Ausschöpfung des Regelbereiches der Kraftmaschine und bei Überschreitung des Maximalwertes vₘₐₓ wird selbstätig die Regelung auf konstante Fahrgeschwindigkeit vₖₒₙₛₜ mittels Retardersteuerung aktiviert, wobei als Führungsgröße selbstätig der Geschwindigkeitswert vₘₐₓ gesetzt wird.

## Beschreibung

Die Erfindung betrifft ein Verfahren zur Geschwindigkeitsbegrenzung in allen Fahrzuständen, im einzelnen mit den Merkmalen des Oberbegriffes aus Anspruch 1, ferner eine Vorrichtung zur Durchführung des Verfahrens, im einzelnen mit den Merkmalen aus dem Oberbegriff des Anspruchs 2.

Es ist bekannt, daß Nutzfahrzeuge mit den zwei Systemen
- Retarder mit Funktion "konstante Geschwindigkeit" - RKG (Regelung auf konstante Geschwindigkeit mittels Retardersteuerung) und
- Automatische Geschwindigkeitsbegrenzung - AGB (bei Überschreitung eines voreinstellbaren Maximalwertes erfolgt eine Abregelung der Brennkraftmaschine)
ausgerüstet sein können. Der Einsatz beider Systeme erfolgt bisher derart, daß beide autark arbeiten -RKG für Fahren im Gefälle und AGB im Traktionsbetrieb. Die Aktivierung des Retarders mit Funktion "konstante Geschwindigkeit" bewirkt bei entsprechender Sollwertvorgabe durch den Fahrer, insbesondere im stärkeren Gefälle, die Einhaltung der vom Fahrer gewünschten Geschwindigkeit. Die automatische Geschwindigkeitsbegrenzung (AGB) bewirkt im Traktionsbetrieb (=Motorbetrieb), also in der Ebene, Steigung oder auch bei geringem Gefälle, bei dem der Motor in der Regel im Leerlauf arbeitet und somit eine geringe Motorbremswirkung und Eigenverzögerung aufweist, das Einhalten einer fest oder variabel vorgegebenen Maximalgeschwindigkeit.

Das System zur automatischen Geschwindigkeitsbegrenzung im Traktionsbetrieb umfaßt eine Regeleinrichtung und eine Stelleinrichtung, die an der Brennkraftmaschine, speziell an der Brennstoffdosiereinrichtung (Drosselklappe oder Einspritzvorrichtung) angreift. Ein gesetzlich vorgeschriebener oder ein anderer gewünschter Geschwindigkeitswert, der nicht überschritten werden soll, ist entweder in der Regeleinrichtung fest gespeichert oder frei vom Fahrer einstell- und in der Regeleinrichtung hinterlegbar.

Der Istwerteingang der Regeleinrichtung ist an eine Meßeinrichtung gekoppelt, welche die Istgeschwindigkeit des Fahrzeuges bzw. die Drehzahl der Räder mißt. Es erfolgt ein ständiger Vergleich zwischen der aktuellen Istgeschwindigkeit und dem Geschwindigkeitswert, der nicht überschritten werden soll (voreingestellte Maximalgeschwindigkeit).

Ist die aktuelle Istgeschwindigkeit kleiner als die voreingestellte Maximalgeschwindigkeit, wird ein vom Fahrer beispielsweise am Gaspedal vorgegebener Wunsch nach einer höheren Geschwindigkeit direkt in ein Stellsignal für die Brennstoffdosiereinrichtung umgesetzt. Diese Steuerung bleibt dabei unbeeinflußt vom Regelsystem. Ist die aktuelle Istgeschwindigkeit jedoch höher als die eingestellte voreingestellte Maximalgeschwindigkeit, wird eine Regelung zur Einhaltung der voreingestellten Maximalgeschwindigkeit aktiviert. Diese ist der direkten Ansteuerung der Brennstoffdosiereinrichtung, beispielsweise durch das Gaspedal, übergeordnet. Die Abweichung zwischen Ist- und voreingestellter Maximalgeschwindigkeit wird in ein Stellsignal für die Stelleinrichtung, die unmittelbar an der Brennstoffdosiereinrichtung der Brennkraftmaschine wirksam wird, umgewandelt. Die Brennkraftmaschine wird soweit zurückgeregelt, bis der maximale Geschwindigkeitswert nicht mehr überschritten wird. Bei Fahrt im Gefälle kann das System der automatischen Geschwindigkeitsbegrenzung solange wirksam werden, bis der Regelbereich, der vorzugsweise den Arbeitsbereich der Brennkraftmaschine umfaßt, ausgeschöpft ist. Befindet sich die Brennkraftmaschine im Leerlauf, d.h. der Regelbereich ist ausgeschöpft, wird ohne Nutzung zusätzlicher Hilfsmittel, wie beispielsweise der Betriebsbremse oder durch den Fahrer zuschaltbarer weiterer Systeme, die voreingestellte Maximalgeschwindigkeit aufgrund der geringen Bremswirkung der Brennkraftmaschine und der im Gefälle erfolgenden Beschleunigung des Fahrzeuges, der voreingestellte Maximalwert überschritten.

Der Fahrer hat nun die Möglichkeit, bei einem Fahrzeug mit installiertem Retarder mit "Konstantgeschwindigkeitsfunktion" sich einen bestimmten Wert für die im Gefälle einzuhaltende konstante Geschwindigkeit vorzugeben. Dieses System zur Einhaltung der Konstantgeschwindigkeit ist ebenfalls eine Regelung, hier als zweite Regelung bezeichnet. Der aktuelle Wert der Istgeschwindigkeit wird ständig gemessen und dem Istwerteingang einer zweiten Regeleinrichtung zugeführt. Der Sollwert wird dem Sollwerteingang der zweiten Regeleinrichtung zugewiesen. Eine Abweichung des Istwertes vom Sollwert bewirkt ein Stellsignal für eine zweite Stelleinrichtung, die mit dem Retarder in Verbindung steht und eine Änderung des Füllungsgrades des Retarders und damit des erreichbaren Bremsmomentes bewirken kann.

Der Nachteil des Nebeneinanderexistierens der beiden Systeme besteht darin, daß mit beiden Systemen unterschiedliche maximal zulässige Geschwindigkeiten, d.h. voneinander abweichende Werte für die voreingestellte Maximalgeschwindigkeit und die Konstantgeschwindigkeit eingeregelt werden können. Entsprechend des Arbeitsbereiches des Retarders kann dabei der vorgebbare Sollwert für die Konstantgeschwindigkeit wesentlich höher liegen, als die für die automatische Geschwindigkeitbegrenzung vorgegebene voreingestellte Maximalgeschwindigkeit. Zur weiteren Anpassung an die zulässige Geschwindigkeit ist daher ein verschleißbehaftetes Betätigen der Betriebsbremse erforderlich. Da die Regelung auf konstante Geschwindigkeit mittels Retardersteuerung nur durch manuelle Betätigung des Fahrers aktivierbar ist, bedeutet dies eine zusätzliche Ablenkung vom Fahrgeschehen. Weiterhin kann keine genaue Einstellung des Geschwindigkeitswertes erfolgen.

Zusammenfassend kann festgestellt werden, daß die Einhaltung einer vorgegebenen Höchstgeschwindigkeit im Gefälle mit der derzeitigen Anordnung problematisch ist. Die Aktivierung der Regelung auf konstante Fahrgeschwindigkeit im Gefälle erfordert einen Fahrereingriff. Versäumt der Fahrer diesen Eingriff, so steigt die Fahrgeschwindigkeit u.U. deutlich über die zulässige Höchstgeschwindigkeit oder erfordert die verschleißträchtige Betätigung der Betriebsbremse. Analog gelten diese Aussagen auch für Fahrzeuge, die mit anderen Antriebsmaschinen, beispielsweise einem Elektromotor, ausgestattet sind.

Die Aufgabe der Erfindung besteht deshalb darin, ein Verfahren zur Geschwindigkeitsbegrenzung in allen Fahrzuständen und eine Vorrichtung zur Durchführung des Verfahrens derart zu entwickeln, daß die genannten Nachteile der bisherigen Lösung vermieden werden, d.h. ein bestimmter vorgebbarer Wert für die zulässige Fahrgeschwindigkeit in keinem Fahrzustand überschritten wird.

Die Aufgabe wird durch die kennzeichnende Merkmale der Ansprüche 1 und 2 gelöst. Vorteilhafte Ausführungen sind in den Unteransprüchen wiedergegeben.

Durch eine selbstätige Aktivierung der Regelung auf konstante Fahrgeschwindigkeit mittels Retardersteuerung bei Ausschöpfung des Regelbereiches der Kraftmaschine bzw. im Leerlauf der Kraftmaschine bei Überschreitung des Maximal- bzw. Grenzwertes der Fahrgeschwindigkeit vₘₐₓ mit Setzen der Führungsgröße gleich vₘₐₓ, kann die maximal zulässige Geschwindigkeit in allen Fahrzuständen ohne zusätzliche verschleißträchtige Betätigung einer zusätzlichen Bremseinrichtung eingehalten werden. Die Automatisierung der Aktivierung der Regelung auf konstante Fahrgeschwindigkeit mittels Retardersteuerung führt zu einer deutlichen Entlastung des Fahrpersonals und dient somit der Erhöhung der Sicherheit und des Bedienkomforts.

Die vorrichtungsmäßige Umsetzung besteht in der Verkopplung der beiden Regeleinrichtungen, wobei die Regelung auf konstante Fahrgeschwindigkeit mittels Retardersteuerung immer der Abregelung der Kraftmaschine, d.h. dem System der automatischen Geschwindigkeitsbegrenzung, untergeordnet ist.

Die Vorrichtung umfaßt eine erste Regeleinrichtung zur Abregelung der Brennkraftmaschine, wobei sich der Regelbereich vorzugsweise über den gesamten Arbeitsbereich der Kraftmaschine erstreckt, und eine zweite Regeleinrichtung zur Regelung auf konstante Fahrgeschwindigkeit mittels Retardersteuerung, die der Abregelung der Kraftmaschine untergeordnet ist. Es sind je nach Ausführung wenigstens eine Einrichtung, die eine mittels einer Meßeinrichtung gebildete Regelgröße mit dem Maximalwert vergleicht und Mittel, die bei Überschreitung ein Aktivieren der ersten Regeleinrichtung und erst bei vollständiger Ausnutzung des Regelbereiches der Kraftmaschine selbstätig die zweite Regeleinrichtung zuschalten, vorgesehen. Die Einrichtung kann ein einzelner Vergleicher sein, dessen ermittelte Regelabweichung den beiden Regeleinrichtungen zugeführt wird, oder es ist jeweils eine Einrichtung innerhalb der beiden Regeleinrichtungen vorgesehen.

Als Mittel zur Realisierung der Verkopplung der beiden Regelsysteme sind elektronische Schaltsysteme bzw. logische Schaltungen oder programmierte Routinen möglich.

Im Fall der zusätzlichen Aktivierung der Regelung auf konstante Fahrgeschwindigkeit wird die maximal zulässige Geschwindigkeit selbstätig als Führungsgröße der Regelung auf konstante Fahrgeschwindigkeit gesetzt. Begrenzt wird diese Möglichkeit jedoch durch den jeweiligen Arbeitsbereich des Retarders (Auslegung, Baugröße).

Das Prinzip der Erfindung wird nachfolgend anhand eines Schemas kurz erläutert. Die Prinzipdarstellung verdeutlicht eine erste Steuer-bzw. Regeleinrichtung 1 für das Abregeln einer Brennkraftmaschine und eine zweite Steuer- bzw. Regeleinrichtung 2 für die Regelung auf konstante Fahrgeschwindigkeit mittels Retardersteuerung. Die erste Regeleinrichtung umfaßt ein Steuer-bzw. Regelgerät 3 und ein erstes Stellglied 4, das an der Brennstoffdosiereinrichtung der Brennkraftmaschine 5 wirksam wird.

Die zweite Regeleinrichtung 2 umfaßt ein Steuer- bzw. Regelgerät 6 und den Retarder 7, sowie eine hier nicht verdeutlichte Stelleinrichtung, mittels der eine Einstellung des Füllungsgrades des Retarders erfolgt. Beide Regeleinrichtungen sind durch eine Kopplung 8 miteinander verbunden, wobei das Regelsystem zur Regelung auf konstante Fahrgeschwindigkeit der Abregelung der Brennkraftmaschine untergeordnet ist. Die Kopplung 8 kann beispielsweise mittels einer elektronischen Schaltung realisiert werden.

Die Aktivierung des zweiten Regelsystems erfolgt bei völliger Ausschöpfung des Regelbereiches der Kraftmaschine, hier der Brennkraftmaschine 5, d.h. es liegt eine Regelabweichung zwischen der aktuellen Istgeschwindigkeit und der vorgegebenen zulässigen Maximalgeschwindigkeit dahingehend vor, daS die vorgegebene zulässige Maximalgeschwindigkeit von der Istgeschwindigkeit überschritten ist und gleichzeitig die Brennkraftmaschine bereits bis zur untersten Grenze ihres Regelbereiches zurückgeregelt ist.

Bei der Aktivierung des zweiten Regelsystems handelt es sich immer um ein Zuschalten. Das erste Regelsystem ist zwar immer noch aktiviert, bleibt aber aufgrund der Ausschöpfung des Regelbereiches wirkungslos.

Der Einsatz der erfindungsgenäßen Lösung ist bei allen Fahrzeugen mit installiertem Retarder denkbar. Die Kraftmaschine kann dabei als Brennkraftmaschine, Elektromotor o.ä. ausgebildet sein.

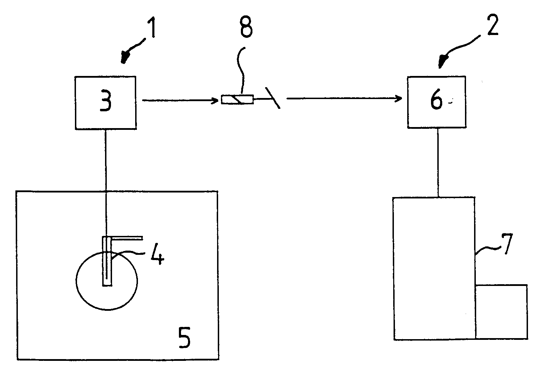

## Patentansprüche

1. Verfahren zur Begrenzung der Fahrgeschwindigkeit auf einen Wert im Bereich eines einstellbaren Maximalwertes vₘₐₓ in allen Fahrzuständen eines Fahrzeuges mit einer Kraftmaschine mit einem Arbeitsbereich und einem Retarder mit den folgenden Merkmalen:
1.1 der aktuelle Istwert der Fahrgeschwindigkeit vᵢₛₜ wird ständig gemessen;
1.2 bei Überschreitung des Maximalwertes vₘₐₓ wird die Kraftmaschine innerhalb eines Regelbereiches abgeregelt;
1.3 eine Regelung auf einen konstanten Wert der Fahrgeschwindigkeit vₖₒₙₛₜ mittels Retardersteuerung ist aktivierbar;
gekennzeichnet durch die folgenden Merkmale:
1.4 der Istwert vᵢₛₜ wird ständig mit dem Maximalwert vₘₐₓ verglichen;
1.5 bei völliger Ausschöpfung des Regelbereiches der Kraftmaschine und bei Überschreitung des Maximalwertes vₘₐₓ wird selbstätig die Regelung auf konstante Fahrgeschwindigkeit vₖₒₙₛₜ mittels Retardersteuerung aktiviert, wobei als Führungsgröße selbstätig der Geschwindigkeitswert vₘₐₓ gesetzt wird.

2. Vorrichtung zur Begrenzung der Fahrgeschwindigkeit auf einen Wert innerhalb eines vorgebbaren Toleranzbereiches eines einstellbaren Maximalwertes vₘₐₓ in allen Fahrzuständen eines Fahrzeuges mit einer Kraftmaschine mit einem Arbeitsbereich von Vollast-Leerlauf und einem Retarder mit den folgenden Merkmalen:
2.1 mit einer ersten Regeleinrichtung zur Abregelung der Kraftmaschine;
2.2 mit einem zweiten Regeleinrichtung zur Regelung auf einen einstellbaren konstanten Geschwindigkeitswert vₖₒₙₛₜ mittels Retardersteuerung;
gekennzeichnet durch folgende Merkmale:
2.3 mit wenigstens einer Einrichtung, die eine mittels einer Meßeinrichtung gebildete Regelgröße mit dem Maximalwert vₘₐₓ vergleicht;
2.4 es sind Mittel vorgesehen, die beide Regeleinrichtunge derart miteinander verkoppeln, daß bei Überschreitung des Maximalwertes die erste Regeleinrichtung aktiviert wird und erst bei völliger Ausschöpfung des Regelbereiches der Kraftmaschine selbstätig die zweite Regeleinrichtung zur Regelung auf konstante Fahrgeschwindigkeit mittels Retardersteuerung aktiviert wird, wobei als Führungsgröße vₖₒₙₛₜ selbstätig vₘₐₓ gesetzt wird.

3. Vorrichtung nach Anspruch 2, dadurch gekennzeichnet, daß der Regelbereich der Kraftmaschine gleich ihrem Arbeitsbereich ist.

4. Vorrichtung nach einem der Ansprüche 2 oder 3, dadurch gekennzeichnet, daß das Mittel eine elektronische Schaltung ist.

5. Vorrichtung nach einem der Ansprüche 2 oder 3, dadurch gekennzeichnet, daß das Mittel eine programmierte Routine ist.

6. Vorrichtung nach einem der Ansprüche 2 bis 5, dadurch gekennzeichnet, daß die erste Regeleinrichtung bei Ausschöpfung des Regelbereiches der Kraftmaschine ein Schaltsignal zur Aktivierung der zweiten Regeleinrichtung gibt.

7. Vorrichtung nach einem der Ansprüche 2 bis 6, dadurch gekennzeichnet, daß die Kraftmaschine eine Brennkraftmaschine ist.
